# EUROPEAN PATENT SPECIFICATION

(11) **EP 1 737 099 B1**
(45) Date of publication and mention of the grant of the patent: **11.03.2015**
(21) Application number: 05013281.0
(22) Date of filing: 20.06.2005
(51) Int. Cl.: G06F 1/32, G06F 1/26, H02J 7/00

(54) **Power management systems and methods for a mobile device**
Energieverwaltungssystem und -verfahren für ein Mobiles Gerät
Systèmes et méthodes de gestion de la puissance pour un dispositif mobil

(43) Date of publication of application: 27.12.2006
(73) Proprietor: BlackBerry Limited, Waterloo, ON N2K 0A7 (CA)
(72) Inventor: Veselic, Dusan, Oakville Ontario L6M 3N7 (CA); Habicher, Michael F., Waterloo Ontario N2L 6B9 (CA)
(74) Representative: Reichl, Wolfgang

(56) References cited:
- US-A1- 2003 052 547
- US-A1- 2004 008 007
- US-B1- 6 288 522
- US-B1- 6 404 168
- "Power Management IC for W-CDMA, Quad-band GSM, Wi-Fi and Bluetooth" [Online] 12 December 2004 (2004-12-12), DIALOG SEMICONDUCTOR , EUROPE , XP002354871 Retrieved from the Internet: URL:http://www.dialog-semiconductor.com/do wnload/Dialog_DA9030_Productbrief.pdf> [retrieved on 2005-11-16] Covers the Dialog Semiconductor DA9030 device of claim 9
- "PM6650" [Online] 1 January 2005 (2005-01-01), QUALCOMM , XP002354872 Retrieved from the Internet: URL:http://www.cdmatech.com/products/pm665 0.jsp> [retrieved on 2005-11-17] Covers the Qualcomm PM6650 device of Claim 10
- "Single-Chip and System Power-Path Management IC" [Online] 1 August 2004 (2004-08-01), TEXAS INSTRUMENTS , DALLAX, TX. USA , XP002354873 Retrieved from the Internet: URL:http://focus.ti.com/lit/ds/symlink/bq2 4032a.pdf> [retrieved on 2005-11-16] Covers the TI BQ24032 device of claim 11

## Description

### FIELD

The technology described in this patent document relates generally to the field of mobile devices. More particularly, power management systems and methods are provided for a mobile device.

### BACKGROUND

Providing an external source of power to a mobile device, such as a personal digital assistant ("PDA"), wireless two-way messaging device, cellular phone, etc., requires design considerations with respect to both the mobile device and the power source. Most mobile devices provide a distinct power interface for receiving power from a power source, for instance to recharge a battery, and a separate data interface for communicating. For example, many mobile devices use USB (Universal Serial Bus) interfaces for communicating and use a separate power interface, such as a barrel connector, for receiving power. One reason that a USB interface is not typically used as a power source for a mobile device is that USB specifications require that any devices which are connected to a USB host initiate enumeration within 150 msec of a USB cable being attached. Enumeration is the process whereby devices attached to the USB host request permission to access and draw power from the USB host or hub.

GB2322486A describes a battery charger which has a housing containing a converting means for supplying a DC output via a connector for charging a battery, the converting means being selectively operable from a DC input supply or from an AC input supply.

US 6 288 552 B1 discloses a system in which one of two power supplies is selected in accordance with the needs of the system.

### SUMMARY

In accordance with the teachings described herein, power management systems and methods are provided for a mobile device. A primary power management circuit may be configured to receive an input voltage and use the input voltage to supply power to the mobile device. A secondary power management circuit may be configured to select at least one or a battery input from a rechargeable battery, a first power source input, or a second power source input as the input voltage to the primary power management circuit. The primary power management circuit may use the first power source input to charge the rechargeable battery. The second power management circuit may use the second power source input to charge the rechargeable battery.

A method for supplying power to a mobile device that includes a primary power management circuit, a secondary power management circuit and a rechargeable battery, may include the following steps: selecting at least one of a battery input from the rechargeable battery, a first power source input, or a second power source input as an input voltage to the primary power management circuit; using the input voltage to the primary power management circuit to supply power to the mobile device; and using at least one of the first power source input and the second power source input to charge the rechargeable battery; wherein the primary power management circuit is used to charge the rechargeable battery from the first power source input and the secondary power management circuit is used to charge the rechargeable battery from the second power source input.

### BRIEF DESCRIPTION OF THE DRAWINGS

Figure 1 is a block diagram depicting an example power management system for a mobile device.
Figures 2 and 3 depict the operation of the example power management system when the mobile device is connected to a non-regulated power source.
Figure 4 is a flow diagram depicting an example method for supplying power to a mobile device when the mobile device is connected to a non-regulated power source.
Figures 5 and 6 depict the operation of the example power management system when the mobile device is connected to a regulated power source.
Figure 7 is a flow diagram depicting an example method for supplying power to a mobile device when the mobile device is connected to a regulated power source.
Figures 8 and 9 depict the operation of the example power management system when the mobile device is connected to both a non-regulated source and a regulated source.
Figure 10 is a flow diagram depicting an example method for supplying power to a mobile device when the mobile device is connected to both a non-regulated power source and a regulated power source.
Figure 11 is a block diagram depicting another example power management system for a mobile device.
Figure 12 is a circuit diagram depicting a more detailed example of a power management system for a mobile device.
Figure 13 is a flow diagram depicting another example method for supplying power to a mobile device.
Figure 14 is a block diagram of an example mobile device.

### DETAILED DESCRIPTION

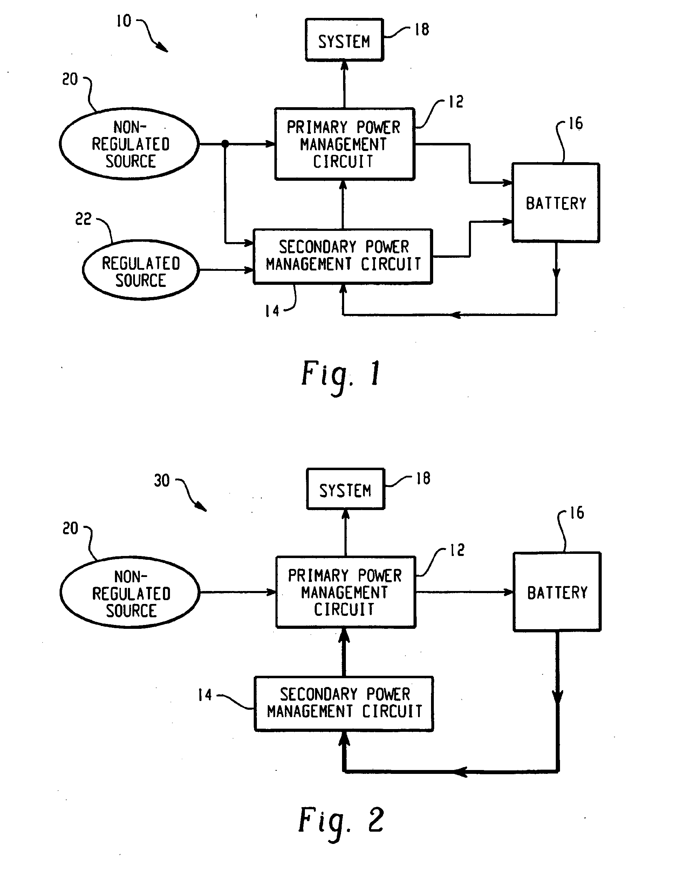

Figure 1 is a block diagram depicting an example power management system 10 for a mobile device. The power management system includes a primary power management circuit 12, a secondary power management circuit 14 and a rechargeable battery 16. Also illustrated are a mobile device system 18, a non-regulated power source 20 and a regulated power source 22. The mobile device system 18 may include some or all of the devices and/or systems in a mobile device other than the primary power management circuit 12, secondary power management circuit 14 and rechargeable battery 16. For example, the mobile device system 18 may include one or more processing devices, memory devices, user interface systems and devices, communications systems, and/or other systems and/or devices in a mobile device. The non-regulated source 20 may, for example, be a standard power source, such as a DC power supply, which does not have standardized limits on the amount of power that may be drawn from the source. The regulated source 22 may, for example, be a Universal Serial Bus (USB) host device or other source having a standardized limit on the amount of power that may be drawn (e.g., 100 mA and 500 mA maximum currents from a USB host).

In operation, power to the system 18 and the primary power management circuit 12 is supplied via the secondary power management circuit 14, which may draw power from the battery 16, non-regulated source 20 and/or regulated source 22. In addition, power to charge the rechargeable battery 16 may be drawn from the non-regulated power source 20 via the primary power management circuit 12 or from the regulated power source 22 via the secondary power management circuit 14. The primary power management circuit 12 is configured to control the battery charging operation using power from the non-regulated source 20, and the secondary power management circuit 14 is configured to control the battery charging operation using power from the regulated source 22. Examples depicting the operation modes of the power management system 10 are provided below with reference to Figures 2-10.

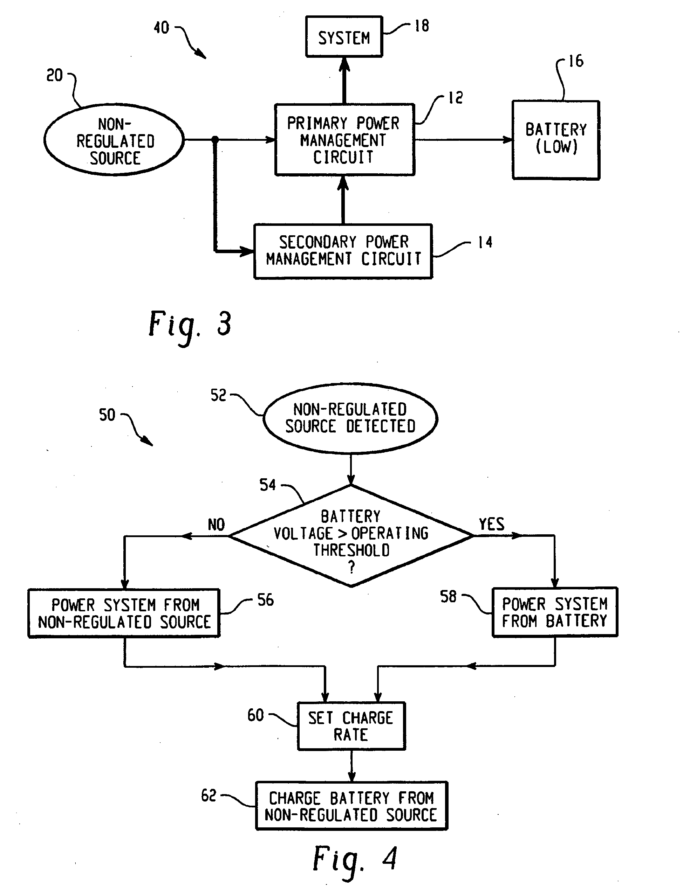

Figures 2 and 3 depict the operation of the example power management system when the mobile device is connected to a non-regulated power source 20. Figure 2 depicts an operational mode when the rechargeable battery 16 has enough stored energy to power the system 18, and Figure 3 depicts an operational mode when the rechargeable battery 16 has been depleted and cannot adequately power the system 18. The bolder arrows in Figures 2 and 3 depict the flow of power that is used to power the system 18, and the narrower arrows depict the flow of power used to charge the rechargeable battery 16.

In the example of Figure 2, the power management system 30 is connected to a non-regulated power source 20, and the battery 16 has enough charge to power the system 18. The power management system 30 may, for example, determine that the battery 16 has enough charge to power the system 18 if its terminal voltage is above a pre-determined threshold level (e.g., 3.2 V). In this example 30, power from the battery 16 is routed to the primary power management circuit 12 by the secondary power management circuit 14, and is used by the primary power management circuit 12 to supply power to the system 18. Once power has been supplied to the primary power management circuit 12, the primary power management circuit 12 is configured to charge the battery 16 from the non-regulated power source 20.

In the example of Figure 3, the power management system 40 is connected to a non-regulated power source 20, and the battery 16 has been depleted below a level at which it can adequately supply power to the system 18. For example, the system 40 may determine that the battery 16 is depleted by measuring that the terminal voltage of the battery 16 has fallen below a pre-determined voltage level. In this example 40, power from the non-regulated source 20 is routed to the primary power management circuit 12 by the secondary power management circuit 14, and is used by the primary power management circuit 12 to supply power to the system 18. Once power has been supplied to the primary power management circuit 12, the primary power management circuit 12 is configured to charge the battery 16 from the non-regulated power source 20.

Figure 4 is a flow diagram depicting an example method 50 for supplying power to a mobile device when the mobile device is connected to a non-regulated power source. At step 52, the non-regulated power source is detected by the mobile device. Then, at step 54, the mobile device determines whether a rechargeable battery in the mobile device has a sufficient amount of stored energy to power the mobile device, for example, by determining if the terminal voltage of the battery is above an operating threshold for the mobile device. If the battery does not have sufficient energy, however, then the system is powered from the non-regulated source at step 56. If the battery has sufficient energy, then the system is powered from the battery at step 58. Once the system is powered at step 56 or 58, the charge rate for charging the rechargeable battery is set at step 58, and the battery is charged from the non-regulated source at step 60.

It should be understood that similar to the other processing flows described herein, one or more of the steps and the order in the flowchart may be altered, deleted, modified and/or augmented and still achieve the desired outcome.

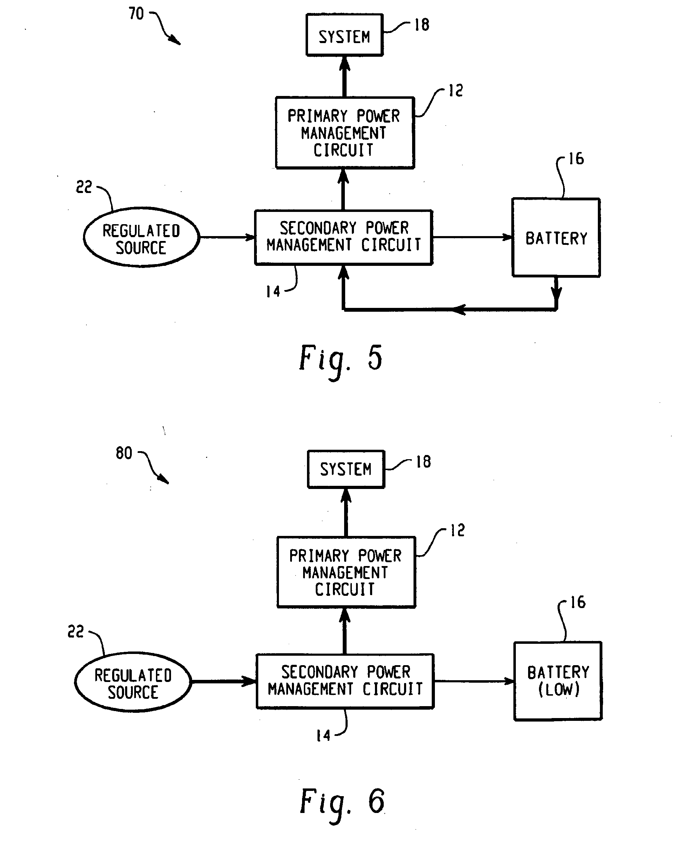

Figures 5 and 6 depict the operation of the example power management system when the mobile device is connected to a regulated power source 22. Figure 5 depicts an operational mode when the rechargeable battery 16 has enough stored energy to power the system 18, and Figure 6 depicts an operational mode when the rechargeable battery 16 has been depleted and cannot adequately power the system 18. The bolder arrows in Figures 5 and 6 depict the flow of power that is used to power the system 18, and the narrower arrows depict the flow of power used to charge the rechargeable battery 16.

In the example of Figure 5, the power management system 70 is connected to a regulated power source 22, and the battery has enough charge to power the system 18. In this example 70, power from the battery 16 is routed to the primary power management circuit 12 by the secondary power management circuit 14, and is used by the primary power management circuit 12 to supply power to the system 18. In addition, the secondary power management circuit 12 is configured to charge the battery 16 from the non-regulated power source 20.

In the example of Figure 6, the power management system 80 is connected to a regulated power source 22, and the battery 16 has been depleted below a level at which it can adequately supply power to the system 18. In this example 70, power from the regulated source 22 is routed to the primary power management circuit 12 by the secondary power management circuit 14, and is used by the primary power management circuit 12 to supply power to the system 18. The secondary power management circuit 12 is configured to use any additional power available from the regulated power source 22 to charge the battery 16.

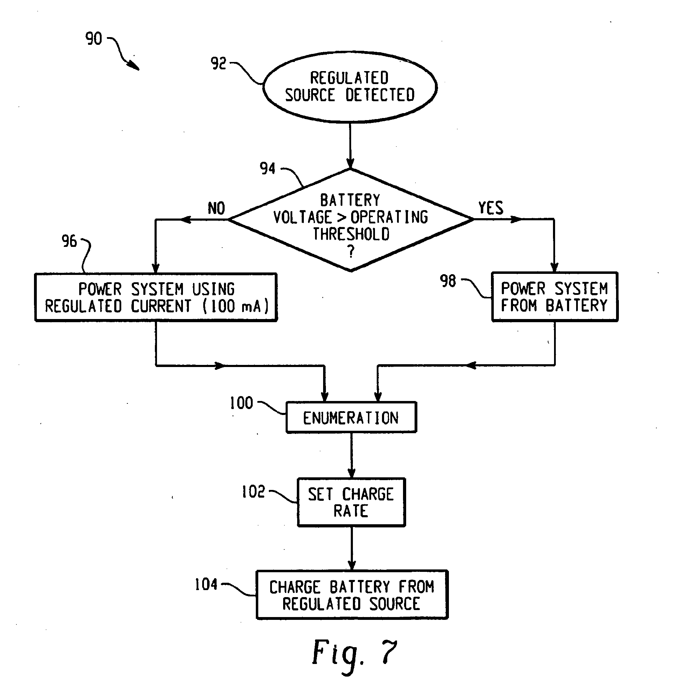

Figure 7 is a flow diagram depicting an example method 90 for supplying power to a mobile device when the mobile device is connected to a regulated power source. At step 92, the regulated power source is detected by the mobile device. Then, at step 94, the mobile device determines whether a rechargeable battery in the mobile device has a sufficient amount of stored energy to power the mobile device, for example by determining if the terminal voltage of the battery is above an operating threshold for the mobile device. If the battery does not have sufficient energy, then the system is powered from the regulated source at step 96. In the case of a USB source, for example, the system may be powered using the 100 mA maximum allowable current from the Vbus line prior to enumeration. If the battery has sufficient energy to power the mobile device, then the system is powered from the battery at step 98.

Once the system has been powered at step 96 or 98, an enumeration procedure may be performed at step 100 in order to obtain an additional power allotment from the regulated source. In the case of a USB source, the continued supply of power from the regulated source may be contingent upon a successful enumeration at step 100. After enumeration is complete, a charge rate for charging the rechargeable battery from the regulated source is set at step 102. Any amount of power available from the regulated source that is not needed to power the system may be delegated to charging the battery in step 102. The battery is then charged from the regulated source at step 104. An example system and method for charging a battery from a regulated source is described in commonly-owned U.S. Patent Application No. 10/372,180, entitled "Circuit and Method of Operation for an Electrical Power Supply."

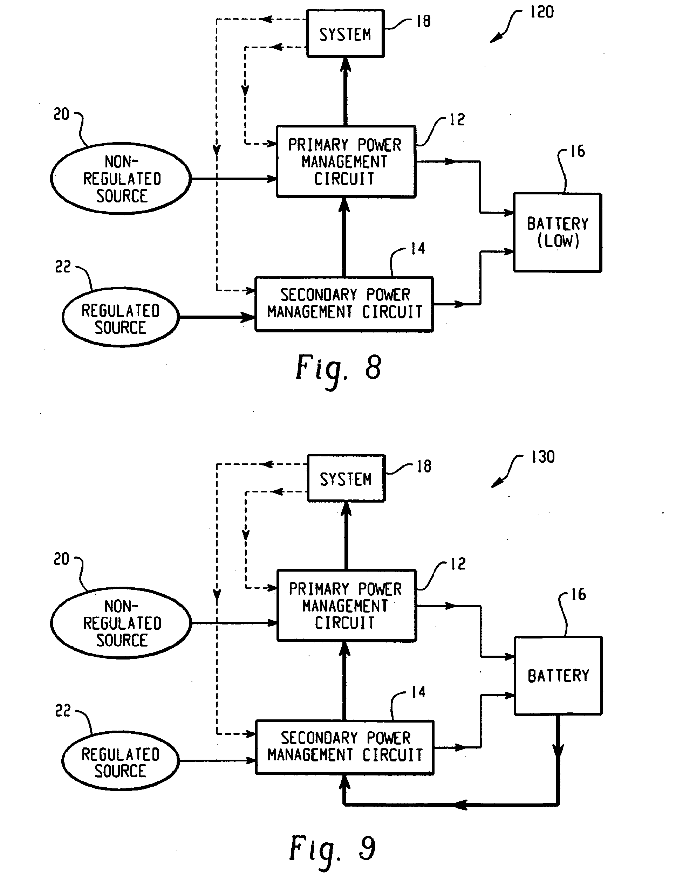

Figures 8 and 9 depict the operation of the example power management system when the mobile device is connected to both a non-regulated source 20 and a regulated source 22. Figure 8 depicts an operational mode for use when the rechargeable battery 16 has been depleted and cannot adequately power the system 18, and Figure 9 depicts on operational mode for use when the rechargeable battery 16 has enough stored energy to power the system 18. The bolder arrows in Figures 8 and 9 depict the flow of power that is used to power the system 18 and the narrower arrows depict the flow of power used to charge the rechargeable battery 16.

In the example of Figure 8, the power management system 120 is connected to both a non-regulated power source 20 and a regulated power source 22, and the battery 16 has been depleted below a level at which it can adequately supply power to the system 18. In this example 120, power from the regulated power source 22 is routed to the primary power management circuit 12 by the secondary power management circuit 14, and the power from the regulated source 22 is used by the primary power management circuit 12 to supply power to the system 18.

Once the primary power management circuit 12 and the system 18 have received power from the regulated source 22 via the secondary power management circuit 14, the battery 16 may be charged from the non-regulated and/or regulated sources 20, 22. In one example, current may be drawn from both the non-regulated source 20 and regulated source 22 to charge the battery 16. The primary power management circuit 12 is configured to charge the battery 16 from the non-regulated power source 20, and the secondary power management circuit 14 is configured to charge the battery 16 from the regulated power source 22. The system 18 may control the percentage of the total charging current supplied by each of the primary and secondary power management circuits 12, 14, as indicated by the dotted arrows in Figure 8.

In the example of Figure 9, the power management system 130 is connected to both a non-regulated power source 20 and a regulated power source 22, and the battery 16 has enough charge to power the system 18. In this example 120, power from the battery 16 is routed to the primary power management circuit 12 by the secondary power management circuit 14, and the power from the battery 16 is used by the primary power management circuit 12 to supply power to the system 18. Once the primary power management circuit 12 and the system 18 have received power from the battery 16 via the secondary power management circuit 14, the battery 16 may be further charged from the non-regulated and/or regulated sources 20, 22, as described above with reference to Figure 8.

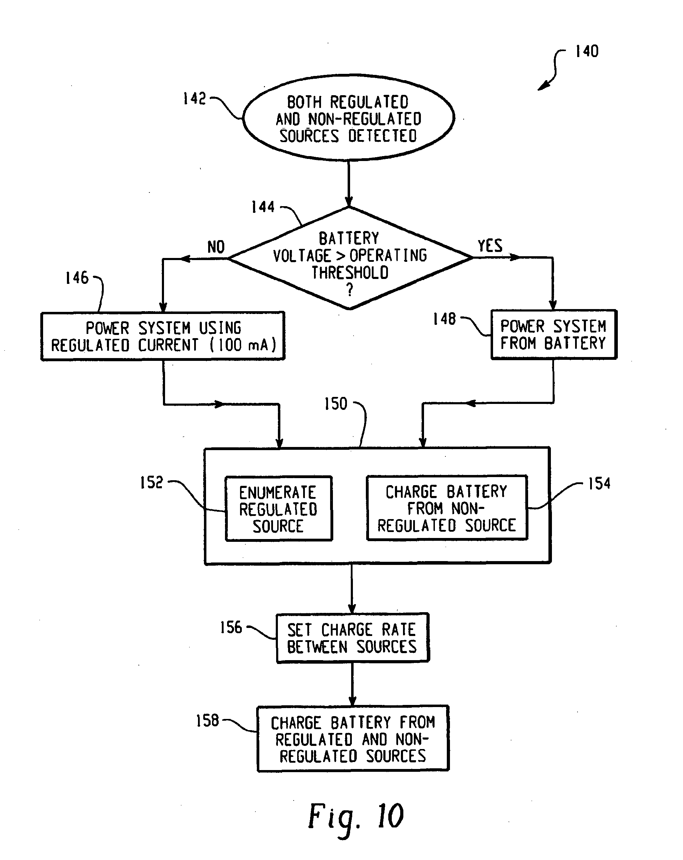

Figure 10 is a flow diagram depicting an example method 140 for supplying power to a mobile device when the mobile device is connected to both a non-regulated power source and a regulated power source. At step 142, the power sources are detected by the mobile device. Then, at step 144, the mobile device determines whether a rechargeable battery in the mobile device has a sufficient amount of stored energy to power the mobile device, for example, by determining if the terminal voltage of the battery is above an operating threshold for the mobile device. If the battery does not have sufficient energy, then the system is powered from the regulated source at step 146. In the case of a USB power source, for example, the system may be powered using the 100 mA maximum allowable Vbus current prior to enumeration. If the battery has sufficient energy to power the mobile device, then the system is powered from the battery at step 148.

Once the system has been powered at step 146 or 148, the method simultaneously performs an enumeration procedure for the regulated source at step 152 and begins charging the battery from the non-regulated source at step 154. Once enumeration is complete, the battery charge current may be divided between both the regulated and non-regulated sources at step 156, and the battery may be charged from both power sources at step 158.

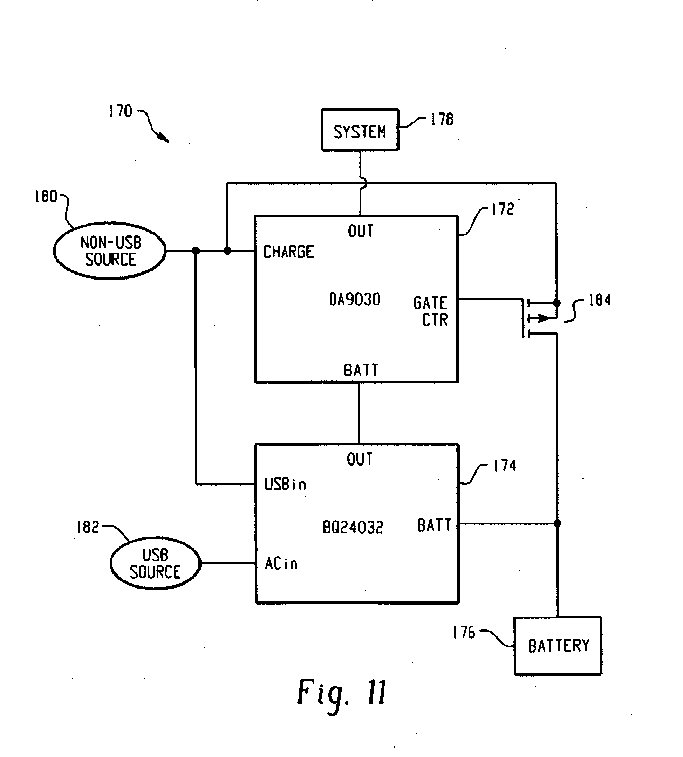

Figure 11 is a block diagram depicting another example power management system 170 for a mobile device. The power management system includes a primary power management circuit 172, a secondary power management circuit 174, a rechargeable battery 176, and a switching device 184. The primary power management circuit 172 may be the DA9030 power management IC for mobile platforms, manufactured by Dialog Semiconductor, the PM6650 power management IC, manufactured by Qualcomm, or some equivalent thereof. The secondary power management circuit 174 may be the BQ24032 single-chip charge and system power-path management IC, manufactured by Texas Instruments Incorporated, or its equivalent. The battery 176 may, for example, be a lithium ion battery, or other type of rechargeable battery suitable for use in a mobile device. The switching device 184 may, for example, be a transistor or transistor circuit, or some other type of controlled switching device or circuit.

Also illustrated in Figure 11 are a mobile device system 178, a non-USB power source 180 and a USB power source 182. The mobile device system 178 may include some or all of the devices and/or systems in a mobile device other than the primary and secondary power management circuits 172, 174 and rechargeable battery 176. For example, the mobile device system 178 may include one or more processing devices (e.g., microprocessor, DSP, etc.), memory devices, user interface systems and devices, communications systems, and/or other systems and/or devices in a mobile device. The non-USB source 180 may, for example, be a DC power supply (e.g., AC adapter), or other power source that is not restricted by the power allotment requirements applicable to a USB host or hub. The USB source 182 may, for example, be a USB host or hub, or other USB device that can supply power to a USB port.

The power management system 170 enables the primary power management circuit 172 (e.g., DA9030) and secondary power management circuit 174 (e.g., BQ24032) to operate together to supply system and battery charging power from both USB and non-USB sources. The DA9030 is especially designed to support the power management requirements of Intel communication processors and PXA27X family of application processors for mobile handsets. The BQ24032 is especially designed to provide USB-port and DC supply power-path management functions for space limited portable applications. Other primary and/or secondary power management circuits could also be used. For instance, in one example, the Qualcomm PM6650 may be used as the primary power management circuit 172.

In the example of Figure 11, a non-USB power port 180 is coupled to the charge pin of the DA9030, the USBin pin of the BQ24032 and a current-carrying terminal of the switching device 184. The USB power port 182 is coupled to the ACin pin of the BQ24032. The output (Out) of the BQ24032 supplies the Battery (Batt) input of the DA9030, and the output (Out) of the DA9030 supplies the system 178. In addition, the rechargeable battery 176 is coupled to the battery input/output pin (Batt) of the BQ24032 and also to the other current-carrying terminal of the switching device 184. The switching device 184 is controlled by the gate control output (Gate Ctr) of the DA9030.

The operation of the power management system 170 to supply power to the system 178 and charge the battery 176 is dependent on the state of the battery 176 and on the availability of a USB or Non-USB power source 180, 182. Both the DA9030 and BQ24032 are configured to charge the battery 176 at different rates, depending on the current battery charge. When the battery 176 is below the minimum system operational voltage level (e.g., 3.2 V), both the DA9030 and BQ24032 are configured to supply only a fraction of the set charge rate in order to gently pre-charge the battery, as recommended when charging Li+ batteries. During this pre-charge period, the terminal voltage on the battery 176 is typically not sufficient to power the system 178 and needs to be supplemented from the charging source 180, 182. This condition is referred to herein as a low battery condition.

In a first operational mode, the power management system 170 for a mobile device is connected to a USB power source 182 and the battery 176 is in a low battery condition. When the USB power source is connected to the power management system 170 for a mobile device, the BQ24032 174 uses the 100 mA available from the Vbus line of the USB source 182 to supply power to the system 178 via the battery input (Batt) of the DA9030 172, and the system 178 communicates with the USB source 182 to attempt enumeration. Once USB enumeration is complete, the BQ24032 174 uses the allotted power from the USB source 182 (e.g., 500 mA) to both power the system 178 and charge the battery 176.

In a second operational mode, the power management system 170 for a mobile device is connected to a USB power source 182 and the battery 176 is charged. In this mode, the BQ24032 174 routes power from the battery 176 to the DA9030 172 to supply the system 178. When the USB power source 182 is connected, the system 178 attempts enumeration with the USB source 182 in order to negotiate a maximum current (e.g., 500 mA) from the USB host, and upon successful enumeration the BQ24032 uses power from the USB source 182 to charge the battery 176.

In a third operational mode, the power management system 170 for a mobile device is connected to a non-USB power source 180 and the battery 176 is in a low battery condition. When the non-USB power source is connected, the BQ24032 174 routes power from the non-USB source 180 to the system 178 via the battery input (Batt) of the DA9030 172. In addition, the DA9030 172 supplies power from the non-USB source 180 to charge the battery 176 by controlling the throughput of the switching device 184.

In a fourth operational mode, the power management system 170 for a mobile device 170 is connected to a non-USB power source 180 and the battery 176 is charged. In this mode, the BQ24032 174 routes power from the battery 176 to the system 178 via the battery input (Batt) of the DA9030 172. When the no-USB power source 182 is connected, the DA9030 172 supplies power from the non-USB source 180 to charge the battery 176 by controlling the throughput of the switching device 184.

In one example, the BQ24032 174 may also be used to supply power from the non-USB source 180 for charging the battery 176 in the third and fourth operational modes. In this example, the system 178 may control the percentage of the overall charge current supplied by each of the DA9030 172 and the BQ24032 174.

In a fifth operational mode, the power management system 170 for a mobile device is connected to both USB and non-USB power sources 180, 182 and the battery 176 is in a low battery condition. When the USB power source 182 is connected to the power management system 170 for a mobile device, the BQ24032 174 uses the 100 mA available from the Vbus line of the USB source 182 to supply power to the system 178 via the battery input (Batt) of the DA9030 172, and the system 178 communicates with the USB source 182 to attempt enumeration. Once USB enumeration is complete, the BQ24032 174 uses the allotted power from the USB source 182 (e.g., 500 mA) to power the system 178 and charge the battery 176. In addition, once the DA9030 172 received power via the BQ24032 174, the DA9030 172 supplies power from the non-USB source 180 to charge the battery 176 by controlling the throughput of the switching device 184. The system 178 may control the percentage of the overall charge current supplied by each of the DA9030 172 and the BQ24032 174.

In a sixth operational mode, the power management system 170 for a mobile device is connected to both USB and non-USB power sources 180, 182 and the battery 176 is charged. In this mode, the BQ24032 174 routes power from the battery 176 to the DA9030 172 to supply the system 178. When the USB power source 182 is connected, the system 178 attempts enumeration with the USB source 182 in order to negotiate a maximum current (e.g., 500 mA) from the USB host, and upon successful enumeration the BQ24032 uses power from the USB source 182 to charge the battery 176. In addition, the DA9030 172 may supply power from the non-USB source 180 to charge the battery 176 by controlling the throughput of the switching device 184. The system 178 may control the percentage of the overall charge current supplied by each of the DA9030 172 and the BQ24032 174.

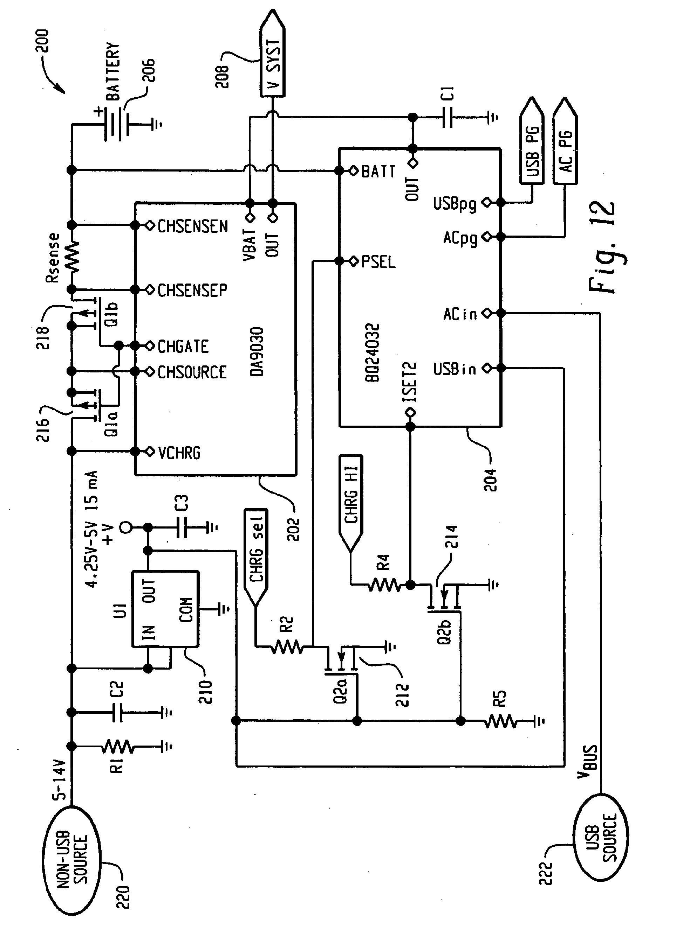

Figure 12 is a circuit diagram depicting a more detailed example of a power management system 200 for a mobile device. The power management system 200 includes a primary power management circuit 202 (e.g., DA9030), a secondary power management circuit 204 (e.g., BQ24032), a rechargeable battery 206 and a switching circuit 216, 218. The primary and secondary power management circuits 202, 204 operate as described above with reference to Figure 11 to supply power to the mobile device system 208 and charge the battery 206 using power from a non-USB source 220 and/or a USB source 222.

Also illustrated in this example 200 is a voltage regulator circuit 210, a source selection circuit 212, and a current selection circuit 214. The voltage regulator circuit 210 is configured to regulate the power supplied by the non-USB source 220 to provide a voltage-regulated input (e.g., 4.2 - 5.0 V) to the secondary power management circuit 204. In this manner, the voltage regulator circuit 210 may operate as an overvoltage protection circuit for the USBin input of the BQ24032 (204).

The source selection circuit 212 includes a transistor (Q2a) and a source selection control signal (CHRG sel), which are used to generate a power source selection input to the PSEL pin of the secondary power management circuit 204. The source selection control signal (CHRG sel) may, for example, be generated by a processing device in the mobile device system 208, and is used to control which power source input 220, 222 is used to supply the primary power management circuit 202. In the case of a BQ24032, a logic low input to the PSEL pin causes the BQ24032 to select USBin, which is coupled to the regulated output of the voltage regulator 210, and a logic high input to the PSEL pin causes the BQ24032 to select ACin, which is coupled to the Vbus line of the USB source 222.

The current selection circuit 214 includes a transistor (Q2b) and a current selection control signal (CHRG HI), which are used to generate a current selection input to the ISET2 pin of the secondary power management circuit 204. The current selection control signal (CHRG HI) may, for example, be generated by a processing device in the mobile device system 208, and is used to set the maximum current to a high value (e.g., 500 mA) or a low value (e.g., 100 mA). The system 208 may, for example, set the maximum current to the low value as a default setting, and then reset the maximum current to the high value upon successful enumeration with the USB source 222.

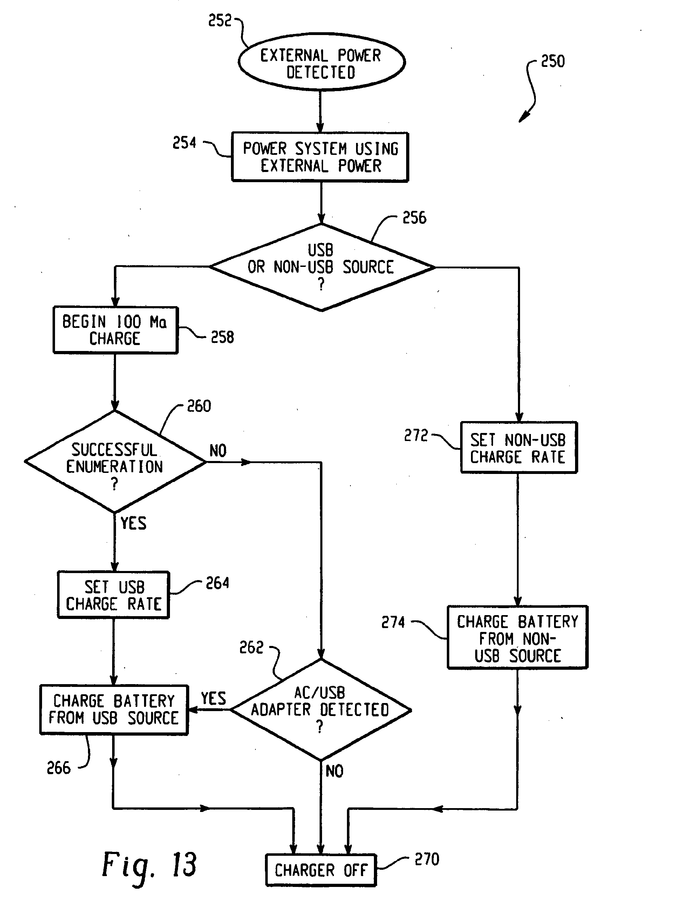

Figure 13 is a flow diagram depicting another example method 250 for supplying power to a mobile device. An external power source is detected by the mobile device at step 252, and the power source is used to power the mobile device system at step 254. Then, at step 256, the method determines whether the mobile device is connected to a USB source, a non-USB source, or both. If the mobile device is connected to a USB source, then the method proceeds to step 258 (the USB path). If the mobile device is connected to a non-USB source, then the method proceeds to step 272 (the non-USB path). If the mobile device is connected to both a USB and a non-USB source, then the method performs the steps in the USB path (starting at step 258) in parallel with the steps in the non-USB path (starting at step 272).

In the USB path, the mobile device begins charging the rechargeable battery using a default maximum current (e.g., 100 mA) at step 258. Then, at step 260, the mobile device attempts to enumerate with the USB power source. If the enumeration is successful (e.g., an enumeration response is received within 100 ms), then a charge rate is set at step 264 and the battery is charged from the USB source at step 266. If the enumeration is not successful, then the method determines if the USB source is an AC/USB adapter at step 262. An AC/USB adapter is a device used to supply power from an AC power source to a USB port, such as the device described in U.S. Patent Application No. 10/864,584, entitled "Universal Serial Bus Charger For a Mobile Device." If an AC/USB adapter is detected, then the method proceeds to step 264. If an AC/USB adapter is not detected at step 262, or when the charging process at step 266 is completed, the charger is turned off at step 270.

In the non-USB path, the charge rate from the non-USB source is set at step 272. If the mobile device is connected to both a USB and a non-USB power source, then step 272 may be delayed until the USB path reaches step 262, or may begin immediately upon completion of step 256. Once the non-USB charge rate is set, the battery is charged from the non-USB source at step 274, and upon completion the charger is turned off at step 270.

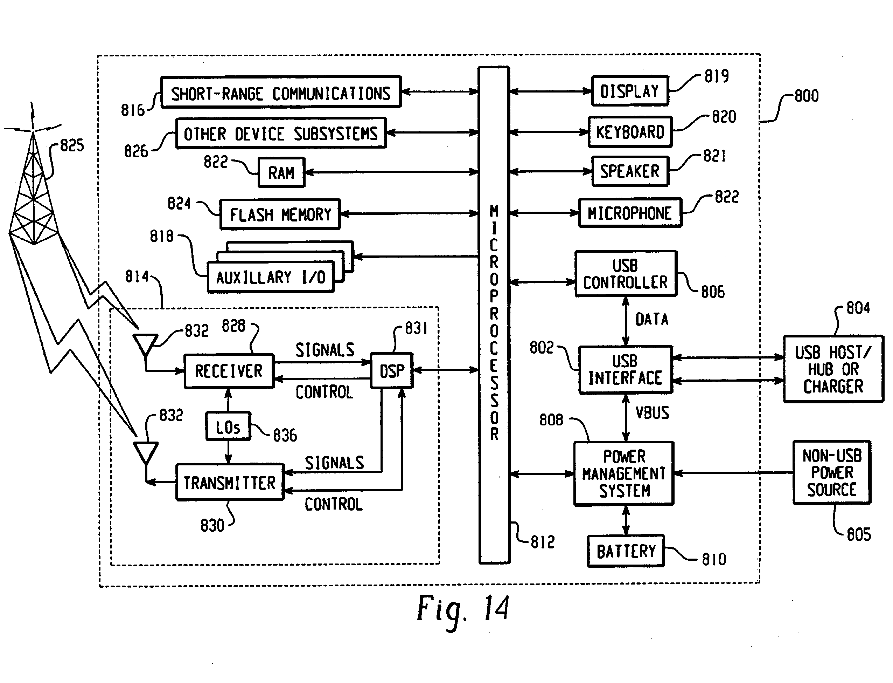

Figure 14 is a block diagram of an example mobile device 800 that includes a power management system 808 for connected the mobile device 800 to a USB power source 804 and/or a non-USB power source 805. The mobile device 800 includes the power management system 808, a USB interface 802, a USB controller 806, a rechargeable battery 810, and a processing device 812. The USB interface 802 may be used by the mobile device 800 to provide USB power to the power management system 808 charging subsystem 808, and may also be used to communicate data between a USB host or hub 804 and the USB controller 806. The power management system 808 provides power to the mobile device 800 and charges the rechargeable battery 810, as described above. The USB controller 806 monitors the USB data lines (D+ and D-), and controls data communication between the processing device 812 and a USB host 804.

In addition to the subsystems and components described above, the mobile device 800 also may include a communications subsystem 814, a short-range communications subsystem 816, input/output devices 818-822, memory devices 822, 824, and various other device subsystems 826.

The processing device 812 controls the overall operation of the mobile device 800. Operating system software executed by the processing device 812 may be stored in a persistent store such as a flash memory 824, but may also be stored in other types of memory devices, such as a read only memory (ROM) or similar storage element. In addition, operating system software, specific device applications, or parts thereof, may be temporarily loaded into a volatile store, such as a random access memory (RAM) 822. Communication signals received by the mobile device 800 may also be stored to RAM 822.

The processing device 812, in addition to its operating system functions, enables execution of software applications on the device 800. A predetermined set of applications that control basic device operations, such as data and voice communications, may be installed on the device 800 during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via the wireless network 825. The PIM data items may be integrated, synchronized and updated via the wireless network 825 with the device user's corresponding data items stored or associated with a host computer system. An example system and method for accomplishing these steps is disclosed in "System And Method For Pushing Information From A Host System To A Mobile Device Having A Shared Electronic Address," U.S. Patent No. 6,219,694, which is owned by the assignee of the present application.

Communication functions, including data and voice communications, are performed through the communication subsystem 814, and possibly through the short-range communications subsystem 816. If the mobile device 800 is enabled for two-way communications, then the communication subsystem 814 includes a receiver 828, a transmitter 830, and a processing module 831, such as a digital signal processor (DSP). In addition, the communication subsystem 814, configured as a two-way communications device, includes one or more antenna elements 832, 834, and local oscillators (LOs) 836. The specific design and implementation of the communication subsystem 814 is dependent upon the communication network 825 in which the mobile device 800 is intended to operate. For example, a device 800 destined for a North American market may include a communication subsystem 814 designed to operate within the Mobitex™ mobile communication system or DataTAC™ mobile communication system, whereas a device 800 intended for use in Europe may incorporate a General Packet Radio Service (GPRS) communication subsystem.

Network access requirements vary depending upon the type of communication system 825. For example, in the Mobitex™ and DataTAC™ networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device 800 may send and receive communication signals over the communication network 825. Signals received by the antenna 832 through the communication network 825 are input to the receiver 832, which may perform such common receiver functions as signal amplification, frequency down conversion, filtering, channel selection, and analog-to-digital conversion. Analog-to-digital conversion of the received signal allows the DSP 831 to perform more complex communication functions, such as demodulation and decoding. In a similar manner, signals to be transmitted are processed by the DSP 831, and are the input to the transmitter 830 for digital-to-analog conversion, frequency up-conversion, filtering, amplification and transmission over the communication network 825 via the antenna 834.

In addition to processing communication signals, the DSP 831 provides for receiver 828 and transmitter 830 control. For example, gains applied to communication signals in the receiver 828 and transmitter 830 may be adaptively controlled through automatic gain control algorithms implemented in the DSP 831.

In a data communication mode, a received signal, such as a text message or web page download, is processed by the communication subsystem 814 and input to the processing device 812. The received signal is then further processed by the processing device 812 for output to a display 819, or alternatively to some other auxiliary I/O device 818. A device user may also compose data items, such as e-mail messages, using a keyboard 821, such as a QWERTY-style keyboard, and/or some other auxiliary I/O device 818, such as a touchpad, a rocker switch, a thumb-wheel, or some other type of input device. The composed data items may then be transmitted over the communication network 825 via the communication subsystem 814.

In a voice communication mode, overall operation of the device 800 is substantially similar to data communication mode, except that received signals are output to a speaker 821, and signals for transmission are generated by a microphone 822. Alternative voice or audio I/O subsystems, such as a voice message recording subsystem, may also be implemented on the device 800. In addition, the display 819 may also be utilized in voice communication mode, for example to display the identity of a calling party, the duration of a voice call, or other voice call related information.

The short-range communications subsystem 816 enables communication between the mobile device 800 and other proximate systems or devices, which need not necessarily be similar devices. For example, the short-range communications subsystem 816 may include an infrared device and associated circuits and components, or a Bluetooth™ communication module to provide for communication with similarly-enabled systems and devices.

This written description uses examples to disclose the invention, including the best mode, and also to enable a person skilled in the art to make and use the invention. The scope of the invention is defined by the apended claims.

## Claims

1. A power management system (10, 30, 40, 70, 80, 120, 130, 170, 200, 808) for a mobile device 800, comprising:
a primary power management circuit 12 configured to receive an input voltage and use the input voltage to supply power to the mobile device 800;
a secondary power management circuit (14, 174, 204) configured to select at least one of a battery input from a rechargeable battery (16, 176, 206, 810), a first power source input (20, 180, 220, 805), or a second power source input (22, 182, 222, 804) as the input voltage to the primary power management circuit (12, 172, 202);
the primary power management circuit (12, 172, 202) being further configured to use the first power source (20, 180, 220, 805) to charge the rechargeable battery (16, 176, 206, 810); and
the secondary power management circuit (14, 174, 204) being further configured to use the second power source (22, 182, 222, 804) input to charge the rechargeable battery (16, 176, 206, 810);
**characterized in that** the power management system (10, 30, 40, 70, 80, 120, 130, 170, 200, 808) is configured to optionally charge the rechargeable battery (16, 176, 206, 810) from the first power source (12, 172, 202) and the second power source (22, 182, 222, 804) simultaneously.

2. The power management system (10, 30, 40, 70, 80, 120, 130, 170, 200, 808) of claim 1, wherein the second power source (22, 182, 222, 804) input is received from a universal serial bus (USB) source and the first power source (20, 180, 220, 805) input is received from a non-USB source.

3. The power management system (10, 30, 40, 70, 80, 120, 130, 170, 200, 808) of claim 1, wherein if the battery (16, 176, 206, 810) input is below an operational threshold of the mobile device 800, then the secondary power management circuit (14, 174, 204) being operable to select the first power source (20, 180, 220, 805) input or the second power source (22, 182, 222, 804) input as the input voltage to the primary power management circuit (12, 172, 202).

4. The power management system (10, 30, 40, 70, 80, 120, 130, 170, 200, 808) of claim 3, wherein if the battery (16, 176, 206, 810) input is above the operational threshold of the mobile device (800), then the secondary power management circuit (14, 174, 204) being operable to select the battery (16) input as the input voltage to the primary power management circuit (12, 172, 202).

5. The power management system (10, 30, 40, 70, 80, 120, 130, 170, 200, 808) of claim 2, wherein the mobile device (800) is configured to receive enumeration information and set a maximum current of the second power source (22, 182, 222, 804) based on the enumeration information.

6. The power management system (10, 30, 40, 70, 80, 120, 130, 170, 200, 808) of claim 1, wherein if the mobile device (800) is connected to both the first power source (20, 180, 220, 805) input and the second power source (22, 182, 222, 804) input, then the primary (12, 172, 202) and secondary (14, 174, 204) power management circuits being operable to set a charge rate for the rechargeable battery (16, 176, 206, 810) using both the first (20, 180, 220, 805) and second (22, 182, 222, 804) power source inputs.

7. The power management system (10, 30, 40, 70, 80, 120, 130, 170, 200, 808) of claim 6, wherein the primary (12, 172, 202) and secondary (14, 174, 204) power management circuits receive one or more control inputs from a processing device (812) in the mobile device (800) to set the charge rate between the first (20, 180, 220, 805) and second (22, 182, 222, 804) power source inputs.

8. The power management system (10, 30, 40, 70, 80, 120, 130, 170, 200, 808) of claim 1, further comprising:
a switching device (184) coupled between the first power source (20, 180, 220, 805) input and the rechargeable battery (16, 176, 206, 810), wherein the primary power management circuit (12, 172, 202) controls a current flow through the switching device (184) in order to charge the rechargeable battery (16, 176, 206, 810) from the first power source input (20, 180, 220, 805).

9. The power management system (10, 30, 40, 70, 80, 120, 130, 170, 200, 808) of claim 1, wherein the primary power management circuit (12, 172, 202) is a DA9030 power management integrated circuit.

10. The power management system (10, 30, 40, 70, 80, 120, 130, 170, 200, 808) of claim 1, wherein the primary power management circuit (12, 172, 202) is a PM6650 power management integrated circuit.

11. The power management system (10, 30, 40, 70, 80, 120, 130, 170, 200, 808) of claim 1, wherein the secondary power management circuit (14, 174, 204) is a BQ24032 single-chip charge and system power-path management integrated circuit.

12. A method for supplying power (50, 90, 140, 250) to a mobile device (800) that includes a primary power management circuit (12, 172, 202), a secondary power management circuit (14, 174, 204) and a rechargeable battery (16, 176, 206, 810), comprising:
selecting at least one of a battery input from the rechargeable battery (16, 176, 206, 810), a first power source (20, 180, 220, 805) input, or a second power source (22, 182, 222, 804) input as an input voltage to the primary power management circuit (12, 172, 202);
using the input voltage to the primary power management circuit (12, 172, 202) to supply power to the mobile device (800); and
using at least one of the first power source (20, 180, 220, 805) input and the second power source (22, 182, 222, 804) input to charge the rechargeable battery (16, 176, 206, 810);
**characterized in that** the primary power management circuit (12, 172, 202) is used to charge the rechargeable battery (16, 176, 206, 810) from the first power source (20, 180, 220, 805) input and the secondary power management circuit (14, 174, 204) is used to charge the rechargeable battery (16, 176, 206, 810) from the second power source input (22, 182, 222, 804); and
providing the option for using the first power source (20, 180, 220, 805) input and the second power (22, 182, 222, 804) source input for charging the rechargeable battery (16, 176, 206, 810) simultanously.

13. The method of claim 12, wherein the second power source (22, 182, 222, 804) input is received from a universal serial bus (USB) source and the first power source (20, 180, 220, 805) input is received from a non-USB source.

14. The method of claim 12, wherein the secondary power management circuit (14, 174, 204) is used to select at least on of the battery input from the rechargeable battery (16, 176, 206, 810) the first power source (20, 180, 220, 805) input; or the second power source (22, 182, 222, 804) input as the input voltage to the primary power management circuit (12, 172, 202).

15. The method of claim 12, further comprising:
detecting if the battery input from the rechargeable battery (16, 176, 206, 810) is below an operational threshold of the mobile device (800);
if the battery input from the rechargeable battery (16, 176, 206, 810) is below the operational threshold of the mobile device (800), then selecting at least one of the first power source (20, 180, 220, 805) input or the second power source (22, 182, 222, 804) input as the input voltage to the primary power management circuit (12, 172, 202) ; and
if the battery input from the rechargeable battery (16, 176, 206, 810) is not below the operational threshold of the mobile device, then selecting the battery input as the input voltage to the primary power management circuit (12, 172, 202).

16. The method of claim 12, further comprising:
receiving enumeration information from a universal serial bus (USB) host device (804); and
setting a maximum current of the second power source (22, 182, 222, 804) based on the enumeration information.

17. The method of claim 12, further comprising:
if the mobile device (800) is connected to both the first power source (20, 180, 220, 805) input and the second power source (22, 182, 222, 804) input, then setting a charge rate for the rechargeable battery (16, 176, 206, 810) using both the first (20, 180, 220, 805) and second (22, 182, 222, 804) power source inputs.

18. A mobile device (800), comprising:
a rechargeable battery (16, 176, 206, 810);
a processing sub-system (812); and
a power management system (10, 30, 40, 70, 80, 120, 130, 170, 200, 808) according to any of claims 1 to 11.

## Patentansprüche

1. Leistungsverwaltungssystem (10, 30, 40, 70, 80, 120, 130, 170, 200, 808) für eine mobile Vorrichtung (800), das aufweist:
eine primäre Leistungsverwaltungsschaltung (12), die konfiguriert ist zum Empfangen einer Eingangsspannung und Verwenden der Eingangsspannung, um Leistung an die mobile Vorrichtung (800) zu liefern;
eine sekundäre Leistungsverwaltungsschaltung (14, 174, 204), die konfiguriert ist zum Auswählen zumindest eines aus einem Batterieeingang von einer wiederaufladbaren Batterie (16, 176, 206, 810), einem ersten Leistungsquelleeingang (20, 180, 220, 805) oder einem zweiten Leistungsquelleeingang (22, 182, 222, 804) als die Eingangsspannung an die primäre Leistungsverwaltungsschaltung (12, 172, 202);
wobei die primäre Leistungsverwaltungsschaltung (12, 172, 202) weiter konfiguriert ist zum Verwenden der ersten Leistungsquelle (20, 180, 220, 805), um die wiederaufladbare Batterie (16, 176, 206, 810) zu laden; und die sekundäre Leistungsverwaltungsschaltung (14, 174, 204) weiter konfiguriert ist zum Verwenden des zweiten Leistungsquelleeingangs (22, 182, 222, 804), um die wiederaufladbare Batterie (16, 176, 206, 810) zu laden; **dadurch gekennzeichnet, dass**
das Leistungsverwaltungssystem (10, 30, 40, 70, 80, 120, 130, 170, 200, 808) konfiguriert ist zum optionalen Laden der wiederaufladbaren Batterie (16, 176, 206, 810) von der ersten Leistungsquelle (12, 172, 202) und der zweiten Leistungsquelle (22, 182, 222, 804) gleichzeitig.

2. Das Leistungsverwaltungssystem (10, 30, 40, 70, 80, 120, 130, 170, 200, 808) gemäß Anspruch 1, wobei der Eingang der zweiten Leistungsquelle (22, 182, 222, 804) von einer USB(Universal Serial Bus)-Quelle empfangen wird und der Eingang der ersten Leistungsquelle (20, 180, 220, 805) von einer Nicht-USB-Quelle empfangen wird.

3. Das Leistungsverwaltungssystem (10, 30, 40, 70, 80, 120, 130, 170, 200, 808) gemäß Anspruch 1, wobei, wenn der Batterieeingang (16, 176, 206, 810) unter einer Betriebsschwelle der mobilen Vorrichtung (800) ist, die sekundäre Leistungsverwaltungsschaltung (14, 174, 204) betriebsfähig ist zum Auswählen des Eingangs der ersten Leistungsquelle (20, 180, 220, 805) oder des Eingangs der zweiten Leistungsquelle (22, 182, 222, 804) als die Eingangsspannung für die primäre Leistungsverwaltungsschaltung (12, 172, 202).

4. Das Leistungsverwaltungssystem (10, 30, 40, 70, 80, 120, 130, 170, 200, 808) gemäß Anspruch 3, wobei, wenn der Batterieeingang (16, 176, 206, 810) über der Betriebsschwelle der mobilen Vorrichtung (800) ist, die sekundäre Leistungsverwaltungsschaltung (14, 174, 204) betriebsfähig ist zum Auswählen des Batterieeingangs (16, 176, 206, 810) als die Eingangsspannung für die primäre Leistungsverwaltungsschaltung (12, 172, 202).

5. Das Leistungsverwaltungssystem (10, 30, 40, 70, 80, 120, 130, 170, 200, 808) gemäß Anspruch 2, wobei die mobile Vorrichtung (800) konfiguriert ist zum Empfangen von Enumerationsinformation und Setzen eines maximalen Stroms der zweiten Leistungsquelle (22, 182, 222, 804) basierend auf der Enumerationsinformation.

6. Das Leistungsverwaltungssystem (10, 30, 40, 70, 80, 120, 130, 170, 200, 808) gemäß Anspruch 1, wobei, wenn die mobile Vorrichtung (800) sowohl mit dem Eingang der ersten Leistungsquelle (20, 180, 220, 805) als auch dem Eingang der zweiten Leistungsquelle (22, 182, 222, 804) verbunden ist, die primären (12, 172, 202) und sekundären (14, 174, 204) Leistungsverwaltungsschaltungen betriebsfähig sind zum Setzen einer Laderate für die wiederaufladbare Batterie (16, 176, 206, 810) unter Verwendung sowohl der ersten (20, 180, 220, 805) als auch der zweiten (22, 182, 222, 804) Leistungsquelleeingänge.

7. Das Leistungsverwaltungssystem (10, 30, 40, 70, 80, 120, 130, 170, 200, 808) gemäß Anspruch 6, wobei die primären (12, 172, 202) und sekundären (14, 174, 204) Leistungsverwaltungsschaltungen einen oder mehrere Steuerungseingänge von einer Verarbeitungsvorrichtung (812) in der mobilen Vorrichtung (800) empfangen, um die Laderate zwischen den ersten (20, 180, 220, 805) und zweiten (22, 182, 222, 804) Leistungsquelleeingängen zu setzen.

8. Das Leistungsverwaltungssystem (10, 30, 40, 70, 80, 120, 130, 170, 200, 808) gemäß Anspruch 1, das weiter aufweist:
eine Schaltvorrichtung (184), die zwischen dem Eingang der ersten Leistungsquelle (20, 180, 220, 805) und der wiederaufladbaren Batterie (16, 176, 206, 810) gekoppelt ist, wobei die primäre Leistungsverwaltungsschaltung (12, 172, 202) einen Stromfluss durch die Schaltvorrichtung (184) steuert, um die wiederaufladbare Batterie (16, 176, 206, 810) von dem ersten Leistungsquelleeingang (20, 180, 220, 805) zu laden.

9. Das Leistungsverwaltungssystem (10, 30, 40, 70, 80, 120, 130, 170, 200, 808) gemäß Anspruch 1, wobei die primäre Leistungsverwaltungsschaltung (12, 172, 202) eine Integrierte Schaltung DA9030 Leistungsverwaltung ist.

10. Das Leistungsverwaltungssystem (10, 30, 40, 70, 80, 120, 130, 170, 200, 808) gemäß Anspruch 1, wobei die primäre Leistungsverwaltungsschaltung (12, 172, 202) eine Integrierte Schaltung PM6650 Leistungsverwaltung ist.

11. Das Leistungsverwaltungssystem (10, 30, 40, 70, 80, 120, 130, 170, 200, 808) gemäß Anspruch 1, wobei die sekundäre Leistungsverwaltungsschaltung (14, 174, 204) eine Integrierte Schaltung BQ24032 Einzelchip-Lade- und-System-Leistungspfadverwaltung ist.

12. Ein Verfahren zum Liefern von Leistung (50, 90, 140, 250) an eine mobile Vorrichtung (800), die eine primäre Leistungsverwaltungsschaltung (12, 172, 202), eine sekundäre Leistungsverwaltungsschaltung (14, 174, 204) und eine wiederaufladbare Batterie (16, 176, 206, 810) umfasst, wobei das Verfahren aufweist:
Auswählen zumindest eines aus einem Batterieeingang von der wiederaufladbaren Batterie (16, 176, 206, 810), einem Eingang einer ersten Leistungsquelle (20, 180, 220, 805) oder einem Eingang einer zweiten Leistungsquelle (22, 182, 222, 804) als eine Eingangsspannung an die primäre Leistungsverwaltungsschaltung (12, 172, 202);
Verwenden der Eingangsspannung an die primäre Leistungsverwaltungsschaltung (12, 172, 202), um Leistung an die mobile Vorrichtung (800) zu liefern; und
Verwenden zumindest eines des Eingangs der ersten Leistungsquelle (20, 180, 220, 805) und des Eingangs der zweiten Leistungsquelle (22, 182, 222, 804), um die wiederaufladbare Batterie (16, 176, 206, 810) zu laden;
**dadurch gekennzeichnet, dass**
die primäre Leistungsverwaltungsschaltung (12, 172, 202) verwendet wird zum Laden der wiederaufladbaren Batterie (16, 176, 206, 810) von dem Eingang der ersten Leistungsquelle (20, 180, 220, 805) und die sekundäre Leistungsverwaltungsschaltung (14, 174, 204) verwendet wird zum Laden der wiederaufladbaren Batterie (16, 176, 206, 810) von dem Eingang der zweiten Leistungsquelle (22, 182, 222, 804); und
Vorsehen der Option zum Verwenden des Eingangs der ersten Leistungsquelle (20, 180, 220, 805) und des Eingangs der zweiten Leistungsquelle (22, 182, 222, 804) zum Laden der wiederaufladbaren Batterie (16, 176, 206, 810) gleichzeitig.

13. Das Verfahren gemäß Anspruch 12, wobei der Eingang der zweiten Leistungsquelle (22, 182, 222, 804) von einer USB(Universal Serial Bus)-Quelle empfangen wird und der Eingang der ersten Leistungsquelle (20, 180, 220, 805) von einer Nicht-USB-Quelle empfangen wird.

14. Das Verfahren gemäß Anspruch 12, wobei die sekundäre Leistungsverwaltungsschaltung (14, 174, 204) verwendet wird zum Auswählen zumindest eines aus dem Batterieeingang von der wiederaufladbaren Batterie (16, 176, 206, 810), dem Eingang der ersten Leistungsquelle (20, 180, 220, 805) oder dem Eingang der zweiten Leistungsquelle (22, 182, 222, 804) als die Eingangsspannung an die primäre Leistungsverwaltungsschaltung (12, 172, 202).

15. Das Verfahren gemäß Anspruch 12, das weiter aufweist:
Erfassen, ob der Batterieeingang von der wiederaufladbaren Batterie (16, 176, 206, 810) unter einer Betriebsschwelle der mobilen Vorrichtung (800) ist;
wenn der Batterieeingang von der wiederaufladbaren Batterie (16, 176, 206, 810) unter der Betriebsschwelle der mobilen Vorrichtung (800) ist, dann Auswählen zumindest eines des Eingangs der ersten Leistungsquelle (20, 180, 220, 805) oder des Eingang der zweiten Leistungsquelle (22, 182, 222, 804) als die Eingangsspannung an die primäre Leistungsverwaltungsschaltung (12, 172, 202); und
wenn der Batterieeingang von der wiederaufladbaren Batterie (16, 176, 206, 810) nicht unter der Betriebsschwelle der mobilen Vorrichtung ist, dann Auswählen des Batterieeingangs als die Eingangsspannung an die primäre Leistungsverwaltungsschaltung (12, 172, 202).

16. Das Verfahren gemäß Anspruch 12, das weiter aufweist:
Empfangen von Enumerationsinformation von einer USB(Universal Serial Bus)-Host-Vorrichtung (804); und
Setzen eines maximalen Stroms der zweiten Leistungsquelle (22, 182, 222, 804) basierend auf der Enumerationsinformation.

17. Das Verfahren gemäß Anspruch 12, das weiter aufweist:
wenn die mobile Vorrichtung (800) mit sowohl dem Eingang der ersten Leistungsquelle (20, 180, 220, 805) als auch dem Eingang der zweiten Leistungsquelle (22, 182, 222, 804) verbunden ist, dann Setzen einer Laderate für die wiederaufladbare Batterie (16, 176, 206, 810) unter Verwendung sowohl der ersten (20, 180, 220, 805) als auch zweiten (22, 182, 222, 804) Leistungsquelleeingänge.

18. Eine mobile Vorrichtung (800), die aufweist:
eine wiederaufladbare Batterie (16, 176, 206, 810);
ein Verarbeitungsteilsystem (812); und
ein Leistungsverwaltungssystem (10, 30, 40, 70, 80, 120, 130, 170, 200, 808) gemäß einem der Ansprüche 1 bis 11.

## Revendications

1. Système de gestion d'énergie (10, 30, 40, 70, 80, 120, 130, 170, 200, 808) pour un dispositif mobile (800), comprenant :
un circuit de gestion d'énergie primaire (12, 172, 202) configuré pour recevoir une tension d'entrée et utiliser la tension d'entrée pour fournir de l'énergie au dispositif mobile (800) ;
un circuit de gestion d'énergie secondaire (14, 174, 204) configuré pour sélectionner au moins une d'une entrée de batterie d'une batterie rechargeable (16, 176, 206, 810), d'une entrée de première source d'énergie (20, 180, 220, 805), ou d'une entrée de seconde source d'énergie (22, 182, 222, 804) comme la tension d'entrée au circuit de gestion d'énergie primaire (12, 172, 202) ;
le circuit de gestion d'énergie primaire (12, 172, 202) étant en outre configuré pour utiliser la première source d'énergie (20, 180, 220, 805) pour charger la batterie rechargeable (16, 176, 206, 810) ; et
le circuit de gestion d'énergie secondaire (14, 174, 204) étant en outre configuré pour utiliser l'entrée de seconde source d'énergie (22, 182, 222, 804) pour charger la batterie rechargeable (16, 176, 206, 810) ;
**caractérisé en ce que** le système de gestion d'énergie (10, 30, 40, 70, 80, 120, 130, 170, 200, 808) est configuré pour optionnellement charger la batterie rechargeable (16, 176, 206, 810) à partir de la première source d'énergie (20, 180, 220, 805) et de la seconde source d'énergie (22, 182, 222, 804) simultanément.

2. Système de gestion d'énergie (10, 30, 40, 70, 80, 120, 130, 170, 200, 808) selon la revendication 1, dans lequel l'entrée de seconde source d'énergie (22, 182, 222, 804) est reçue d'une source de bus série universel (USB) et l'entrée de première source d'énergie (20, 180, 220, 805) est reçue d'une source non-USB.

3. Système de gestion d'énergie (10, 30, 40, 70, 80, 120, 130, 170, 200, 808) selon la revendication 1, dans lequel si l'entrée de batterie (16, 176, 206, 810) est inférieure à un seuil opérationnel du dispositif mobile (800), alors le circuit de gestion d'énergie secondaire (14, 174, 204) étant exploitable pour sélectionner l'entrée de première source d'énergie (20, 180, 220, 805) ou l'entrée de seconde source d'énergie (22, 182, 222, 804) comme la tension d'entrée au circuit de gestion d'énergie primaire (12, 172, 202).

4. Système de gestion d'énergie (10, 30, 40, 70, 80, 120, 130, 170, 200, 808) selon la revendication 3, dans lequel si l'entrée de batterie (16, 176, 206, 810) est supérieure au seuil opérationnel du dispositif mobile (800), alors le circuit de gestion d'énergie secondaire (14, 174, 204) étant exploitable pour sélectionner l'entrée de batterie (16) comme la tension d'entrée au circuit de gestion d'énergie primaire (12, 172, 202).

5. Système de gestion d'énergie (10, 30, 40, 70, 80, 120, 130, 170, 200, 808) selon la revendication 2, dans lequel le dispositif mobile (800) est configuré pour recevoir des informations d'énumération et établir un courant maximum de la seconde source d'énergie (22, 182, 222, 804) sur la base des informations d'énumération.

6. Système de gestion d'énergie (10, 30, 40, 70, 80, 120, 130, 170, 200, 808) selon la revendication 1, dans lequel si le dispositif mobile (800) est connecté à la fois à l'entrée de première source d'énergie (20, 180, 220, 805) et à l'entrée de seconde source d'énergie (22, 182, 222, 804), alors les circuits de gestion d'énergie primaire (12, 172, 202) et secondaire (14, 174, 204) étant exploitables pour établir un taux de charge pour la batterie rechargeable (16, 176, 206, 810) en utilisant à la fois les entrées de première (20, 180, 220, 805) et seconde source d'énergie (22, 182, 222, 804).

7. Système de gestion d'énergie (10, 30, 40, 70, 80, 120, 130, 170, 200, 808) selon la revendication 6, dans lequel les circuits de gestion d'énergie primaire (12, 172, 202) et secondaire (14, 174, 204) reçoivent une ou plusieurs entrées de commande d'un dispositif de traitement (812) dans le dispositif mobile (800) pour établir le taux de charge entre les entrées de première (20, 180, 220, 805) et seconde source d'énergie (22, 182, 222, 804).

8. Système de gestion d'énergie (10, 30, 40, 70, 80, 120, 130, 170, 200, 808) selon la revendication 1, comprenant en outre :
un dispositif de commutation (184) couplé entre l'entrée de première source d'énergie (20, 180, 220, 805) et la batterie rechargeable (16, 176, 206, 810), dans lequel le circuit de gestion d'énergie primaire (12, 172, 202) commande une circulation du courant à travers le dispositif de commutation (184) afin de charger la batterie rechargeable (16, 176, 206, 810) à partir de l'entrée de première source d'énergie (20, 180, 220, 805).

9. Système de gestion d'énergie (10, 30, 40, 70, 80, 120, 130, 170, 200, 808) selon la revendication 1, dans lequel le circuit de gestion d'énergie primaire (12, 172, 202) est un circuit intégré de gestion d'énergie de DA9030.

10. Système de gestion d'énergie (10, 30, 40, 70, 80, 120, 130, 170, 200, 808) selon la revendication 1, dans lequel le circuit de gestion d'énergie primaire (12, 172, 202) est un circuit intégré de gestion d'énergie PM6650.

11. Système de gestion d'énergie (10, 30, 40, 70, 80, 120, 130, 170, 200, 808) selon la revendication 1, dans lequel le circuit de gestion d'énergie secondaire (14, 174, 204) est un circuit intégré de gestion de trajet d'énergie de système et de charge monopuce BQ24032.

12. Procédé pour fournir de l'énergie (50, 90, 140, 250) à un dispositif mobile (800) qui comprend un circuit de gestion d'énergie primaire (12, 172, 202), un circuit de gestion d'énergie secondaire (14, 174, 204) et une batterie rechargeable (16, 176, 206, 810), comprenant :
la sélection d'au moins une d'une entrée de batterie de la batterie rechargeable (16, 176, 206, 810), d'une entrée de première source d'énergie (20, 180, 220, 805), ou d'une entrée de seconde source d'énergie (22, 182, 222, 804) comme une tension d'entrée au circuit de gestion d'énergie primaire (12, 172, 202) ;
l'utilisation de la tension d'entrée au circuit de gestion d'énergie primaire (12, 172, 202) pour fournir de l'énergie au dispositif mobile (800) ; et
l'utilisation d'au moins de l'entrée de première source d'énergie (20, 180, 220, 805) et de l'entrée de seconde source d'énergie (22, 182, 222, 804) pour charger la batterie rechargeable (16, 176, 206, 810) ;
caractérise en ce que le circuit de gestion d'énergie primaire (12, 172, 202) est utilisé pour charger la batterie rechargeable (16, 176, 206, 810) à partir de l'entrée de première source d'énergie (20, 180, 220, 805) et le circuit de gestion d'énergie secondaire (14, 174, 204) est utilisé pour charger la batterie rechargeable (16, 176, 206, 810) à partir de l'entrée de seconde source d'énergie (22, 182, 222, 804) ; et
la fourniture de l'option pour utiliser l'entrée de première source d'énergie (20, 180, 220, 805) et l'entrée de seconde source d'énergie (22, 182, 222, 804) pour charger la batterie rechargeable (16, 176, 206, 810) simultanément.

13. Procédé selon la revendication 12, dans lequel l'entrée de seconde source d'énergie (22, 182, 222, 804) est reçue d'une source de bus série universel (USB) et l'entrée de première source d'énergie (20, 180, 220, 805) est reçue d'une source non-USB.

14. Procédé selon la revendication 12, dans lequel le circuit de gestion d'énergie secondaire (14, 174, 204) est utilisé pour sélectionner au moins une de l'entrée de batterie de la batterie rechargeable (16, 176, 206, 810), de l'entrée de première source d'énergie (20, 180, 220, 805), ou de l'entrée de seconde source d'énergie (22, 182, 222, 804) comme la tension d'entrée au circuit de gestion d'énergie primaire (12, 172, 202).

15. Procédé selon la revendication 12, comprenant en outre :
la détection de si l'entrée de batterie de la batterie rechargeable (16, 176, 206, 810) est inférieure à un seuil opérationnel du dispositif mobile (800) ;
si l'entrée de batterie de la batterie rechargeable (16, 176, 206, 810) est inférieure au seuil opérationnel du dispositif mobile (800), sélectionner alors au moins une de l'entrée de première source d'énergie (20, 180, 220, 805), ou de l'entrée de seconde source d'énergie (22, 182, 222, 804) comme la tension d'entrée au circuit de gestion d'énergie primaire (12, 172, 202) ; et
si l'entrée de batterie de la batterie rechargeable (16, 176, 206, 810) n'est pas inférieure au seuil opérationnel du dispositif mobile, sélectionner alors l'entrée de batterie comme la tension d'entrée au circuit de gestion d'énergie primaire (12, 172, 202).

16. Procédé selon la revendication 12, comprenant en outre :
la réception d'informations d'énumération en provenance d'un dispositif hôte (804) de bus série universel (USB) ; et
l'établissement d'un courant maximum de la seconde source d'énergie (22, 182, 222, 804) sur la base des informations d'énumération.

17. Procédé selon la revendication 12, comprenant en outre :
si le dispositif mobile (800) est connecté à la fois à l'entrée de première source d'énergie (20, 180, 220, 805) et à l'entrée de seconde source d'énergie (22, 182, 222, 804), établir alors un taux de charge pour la batterie rechargeable (16, 176, 206, 810) en utilisant à la fois les entrées de première (20, 180, 220, 805) et seconde source d'énergie (22, 182, 222, 804).

18. Dispositif mobile (800), comprenant :
une batterie rechargeable (16, 176, 206, 810) ;
un sous-système de traitement (812) ; et
un système de gestion d'énergie (10, 30, 40, 70, 80, 120, 130, 170, 200, 808) selon l'une quelconque des revendications 1 à 11.
